# EUROPEAN PATENT APPLICATION

(11) **EP 3 480 506 A1**
(43) Date of publication of application: **08.05.2019**
(21) Application number: 18204127.7
(22) Date of filing: 02.11.2018
(51) Int. Cl.: F16L 57/06, F16L 27/10, F16L 51/02

(54) **FLEXIBLE COUPLING**

(30) Priority: 02.11.2017 GB 201718143
(71) Applicant: Rolls-Royce plc, London SW1E 6AT (GB)
(72) Inventor: Clark, Daniel, Derby, Derbyshire DE24 8BJ (GB); Boettcher, Carl, Derby, Derbyshire DE24 8BJ (GB)
(74) Representative: Rolls-Royce plc

(57) **Abstract**

A flexible coupling for a fluid-carrying pipe extends in use between a first pipe portion and a second pipe portion. The flexible coupling comprises a tessellation of first regions and second regions in which the first regions have higher stiffness than the second regions.

## Description

The present disclosure concerns a flexible section of a pipe. It is particularly, though not exclusively, suitable for use in a fluid-carrying pipe of a gas turbine engine.

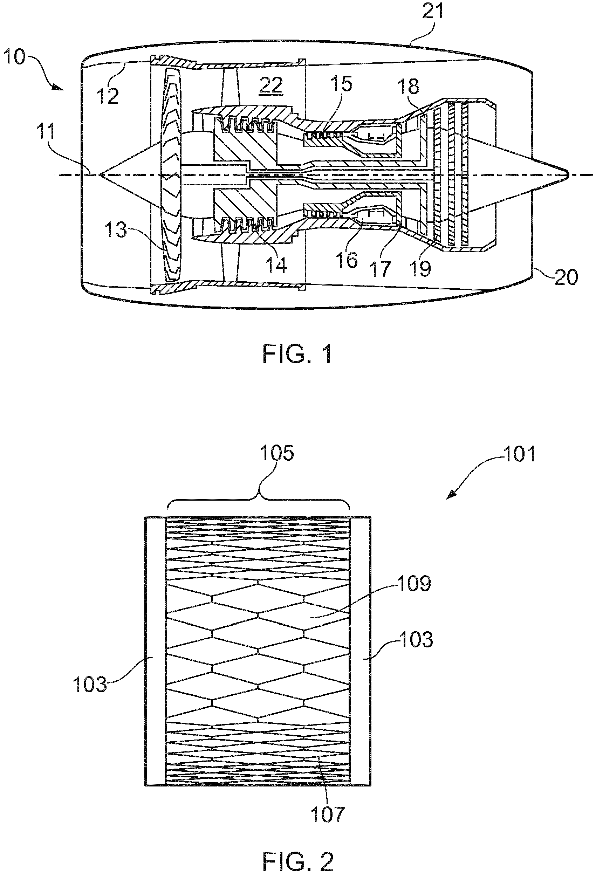

With reference to **Figure 1**, a gas turbine engine is generally indicated at 10, having a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, an intermediate pressure turbine 18, a low-pressure turbine 19 and an exhaust nozzle 20. A nacelle 21 generally surrounds the engine 10 and defines both the intake 12 and the exhaust nozzle 20.

The gas turbine engine 10 works in the conventional manner so that air entering the intake 12 is accelerated by the fan 13 to produce two air flows: a first air flow into the intermediate pressure compressor 14 and a second air flow which passes through a bypass pipe 22 to provide propulsive thrust. The intermediate pressure compressor 14 compresses the air flow directed into it before delivering that air to the high pressure compressor 15 where further compression takes place.

The compressed air exhausted from the high-pressure compressor 15 is directed into the combustion equipment 16 where it is mixed with fuel and the mixture combusted. The resultant hot combustion propipes then expand through, and thereby drive the high, intermediate and low-pressure turbines 17, 18, 19 before being exhausted through the nozzle 20 to provide additional propulsive thrust. The high 17, intermediate 18 and low 19 pressure turbines drive respectively the high pressure compressor 15, intermediate pressure compressor 14 and fan 13, each by suitable interconnecting shaft.

Other gas turbine engines to which the present disclosure may be applied may have alternative configurations. By way of example such engines may have an alternative number of interconnecting shafts (e.g. two) and/or an alternative number of compressors and/or turbines. Further the engine may comprise a gearbox provided in the drive train from a turbine to a compressor and/or fan.

Gas turbine engines typically have a number of pipes around their outsides, to carry fluids from one part of the engine to another or to elsewhere on the aircraft. For example, bleed pipes carry bleed air for handling or cabin air use.

These pipes may be subjected to many dynamic forces which result in stresses on the pipe. Some of the drivers of these stresses are:
- internal or external pressure at working temperature;
- inertia of the pipe itself and the parts supported by it;
- movement imposed on pipe sections by external restraints;
- thermal expansion.

Expansion joints are used in pipe systems to absorb thermal expansion or terminal movement/vibration where the use of expansion loops is undesirable or impractical, for example due to space and weight constraints.

Gimbals are one type of expansion joint and are used, in particular, to control vibration in the piping which transfers compressed air to the airframe. Gimbals are a part of a family of solid metallic flexible couplings used in flow piping at elevated temperatures. Materials include stainless steels and superalloys. A typical bleed pipe system on a gas turbine engine may include 10 to 14 gimbals.

Gimbals are relatively complex fabricated items comprising numerous components. They are an established and mature technology, limited by historical design calculation capabilities and machining technologies of the previous generation. There is limited opportunity to further remove weight or to reduce manufacturing cost. Because of the number of gimbals in a typical installation, they account for a significant weight and cost in the engine.

The inventors have combined, in a novel and inventive way, the new discipline of poroelasticity with developments in CAD and chipless machining, to develop an alternative coupling that can replace the gimbal in applications such as those described above.

Accordingly there is provided a flexible coupling, a fluid-carrying pipe comprising such a coupling and a gas turbine engine comprising such a pipe, as set out in the claims.

Embodiments will now be described by way of example only, with reference to the Figures, in which:
**Figure 1** is a sectional side view of a gas turbine engine, as already described;
**Figure 2** is a side view of a flexible section of a pipe comprising a cut lattice;
**Figure 3** is a side view of a flexible section of a pipe comprising a second embodiment of a cut lattice;
**Figure 4** is a side view of a flexible section of a pipe comprising a plurality of ligaments;
**Figure 5** is a schematic illustration of a single ligament;
**Figure 6** is a side view of a flexible section of a pipe similar to that of Figure 4 and incorporating cross-links;
**Figure 7** is a schematic illustration of one embodiment of cross-links shaped to control stress and strain;
**Figure 8** is a schematic sectional side view of a flexible section of a pipe showing an internal bellows;
**Figure 9** shows an example of a cut pattern;
**Figure 10** shows a second example of a cut pattern;
**Figure 11** shows a third example of a cut pattern;
**Figure 12** is a side view of a flexible section of a pipe comprising a cut pattern;
**Figure 13** is a sectional side view of a section of a pipe comprising a bulged section;
**Figure 14** shows two examples of cut patterns;
**Figure 15** shows how providing two flexible sections in a pipe enables flexing and movement of the pipe;
**Figure 16** is a sectional side view of a section of pipe comprising further features; and
**Figure 17** is a sectional side view of a flexible section of pipe in a glove box

Some features are common between different figures, and common reference numbers are used to identify these.

The invention is to replace the gimbal with a new design of flexible coupling, which is constructed as a unitary component for efficient dynamic loading. The new design may be fabricated from a tube or machined from a bar, or may be formed by an additive manufacturing technique.

In broad terms, the design process for this new flexible coupling is to: i) design an initial shape for the coupling; ii) calculate the expected loading pattern; iii) progressively remove material from the design in regions seeing little or no load; repeat steps ii) and iii) iteratively until a final design is arrived at: when, for example, the calculated loading pattern reaches its acceptable limit for stress, deflection or other parameter. The flexible coupling may be made from the final design by any suitable method, for example by multi-axis laser cutting or by additive manufacture.

Designing structures with hollows, cavities (or internal passageways) has a potential processing advantage against comparable monobloc structures. Specifically, differential contractions can be accommodated by poroelasticity, i.e. distributing the strains spatially and by orientation.

Referring to **Figure 2**, a coupling 101 for a pipe (not shown) comprises attachment flanges 103 to connect the coupling 101 to adjacent sections of the pipe, and a flexible section 105 comprising a cut lattice 107. The lattice 107 defines a plurality of identical cells 109. Such a lattice may be formed by, for example, machining away material from a tube by multi-axis laser cutting. Alternatively, the lattice shape may be formed by an additive manufacturing process.

Regular straight lattices are vulnerable to plastic collapse (buckling) and are sensitive to load orientation. It may therefore be desirable to alter the orientation of the lattice or the shape and size of the cells.

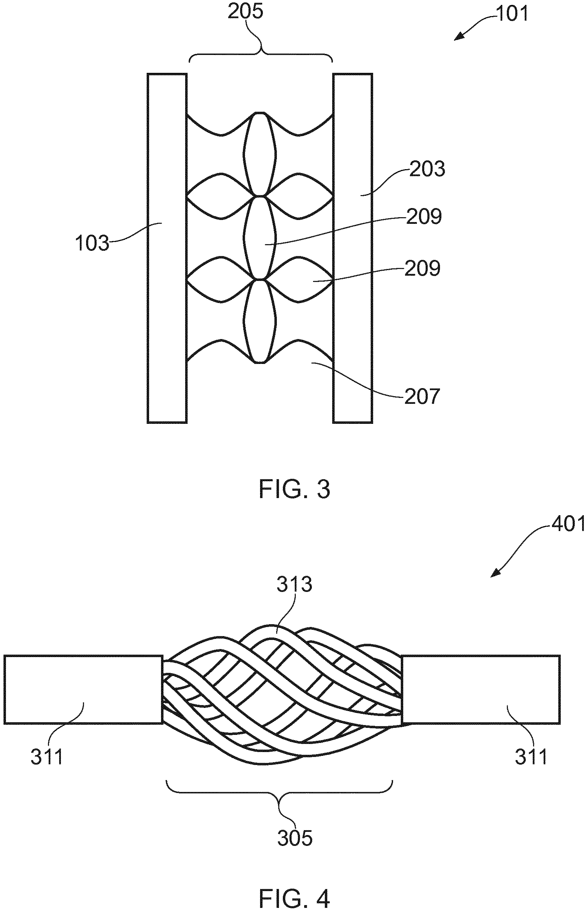

Referring to **Figure 3**, a coupling 101 comprises attachment flanges 103 and a flexible section 205 comprising a cut lattice 207. In this arrangement the cut lattice 207 defines a plurality of cells 209 which are not identical, and which are aligned in different directions. This allows the lattice to respond differently to differing load patterns; it may also allow control over the change in diameter of the flexible section 105 under loading. The lattice may exhibit spring-like behaviour.

**Figure 4** shows a section 401 of a pipe comprising a flexible coupling. In this arrangement, adjacent sections 311 of a pipe are joined by a flexible section 305 comprising a plurality of ligaments 313. The ligaments 313 extend in a generally helical manner around the axis of the pipe. The ligaments 313 are also curved in a radial sense so that the flexible section 305 has a bulged profile and a greater diameter than the pipe sections 311. In other embodiments, the ligaments may have different, or no, curvature in either or both of the helical and radial senses.

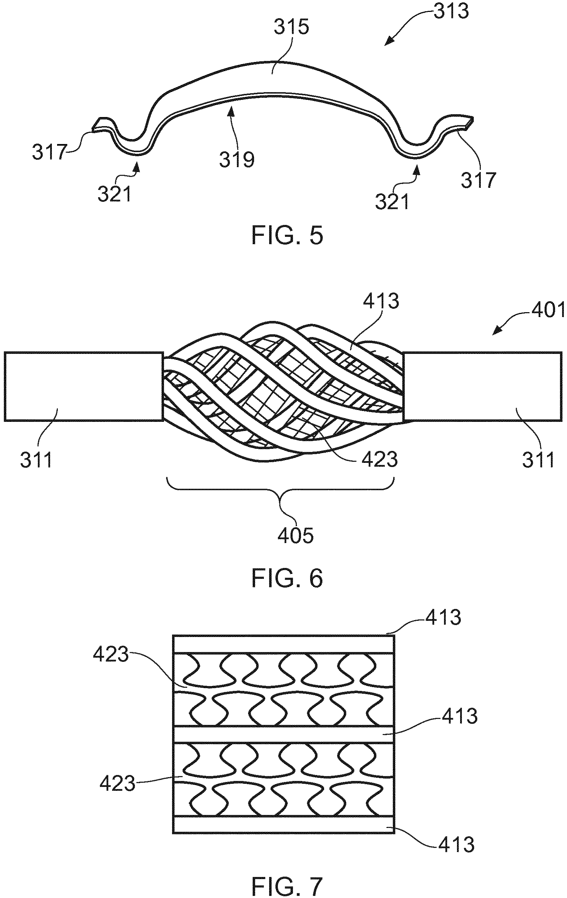

The ligaments 313 may have more complex form and/or curvature than illustrated in Figure 4. This may be advantageous to minimise stress or strain concentrations, to resist buckling, or to more favourably distribute strain into the end connections (not shown) of the ligaments. **Figure 5** shows an example of a ligament 313. The width of the ligament is greater in the central region 315 than in the end regions 317, which will tend to increase its stiffness in the central region. It will be appreciated that the thickness of a ligament may be similarly varied along its length. Also, the ligament has a primary curvature 319 in the central region 315 and a secondary, reversed curvature 321 towards the end regions 317.

As shown in **Figure 6**, the ligaments 413 forming a flexible section 405 may be cross-linked to regulate the stiffness and the extent of displacement. The cross-links 423 do not have to be the same dimension as the primary ligaments 413.

**Figure 7** shows schematically part of a flexible section 405, comprising primary ligaments 413 and cross-links 423. The cross-links 423 are shaped to control strain and stiffness. The control of elastic strain is required to prevent the flexible section from rubbing on the bellows (which will be described below) and to prevent the bellows deforming in a mode termed "squirm" which can lead to failure.

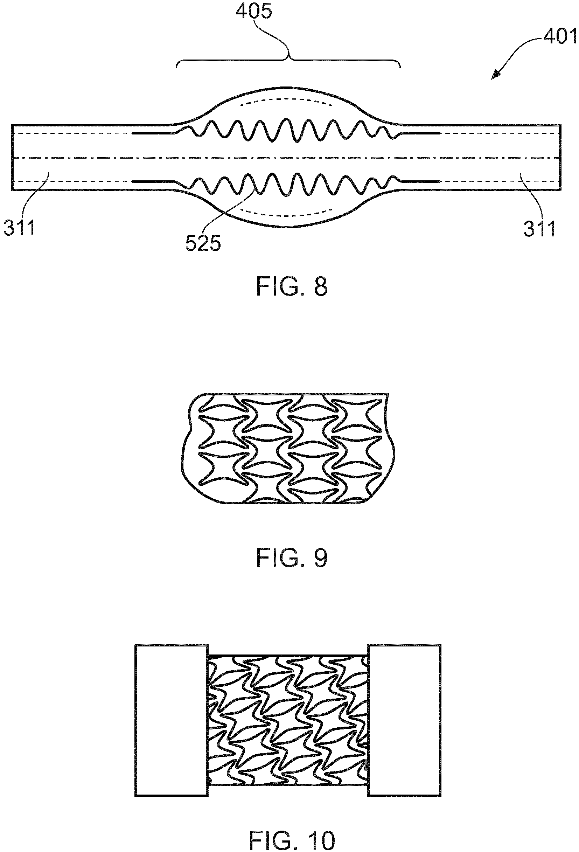

To ensure a 'clean' flow of fluid through a pipe, a bellows may be provided within the pipe extending across the flexible section. Referring to **Figure 8**, a section 401 of a pipe comprises a flexible section 405, which may be of a type as shown in a previous figure or may be of a different type. A bellows 525 is secured within the pipe and extends between the adjacent sections 311 of the pipe. The pipe may include a flow liner to reduce turbulence. In use, the bellows provides a leak-free path for fluid through the flexible section of the pipe and can move and flex to accommodate the movement within the flexible section 405. The bellows 525 may be formed separately from the flexible section of the pipe and inserted from one end, then secured in place by welding or by mechanical fasteners. A flow straightener may be provided at one end or at both ends of the bellows. It may be possible to use an additive manufacturing technique to make the flexible section and the bellows together as a single unit.

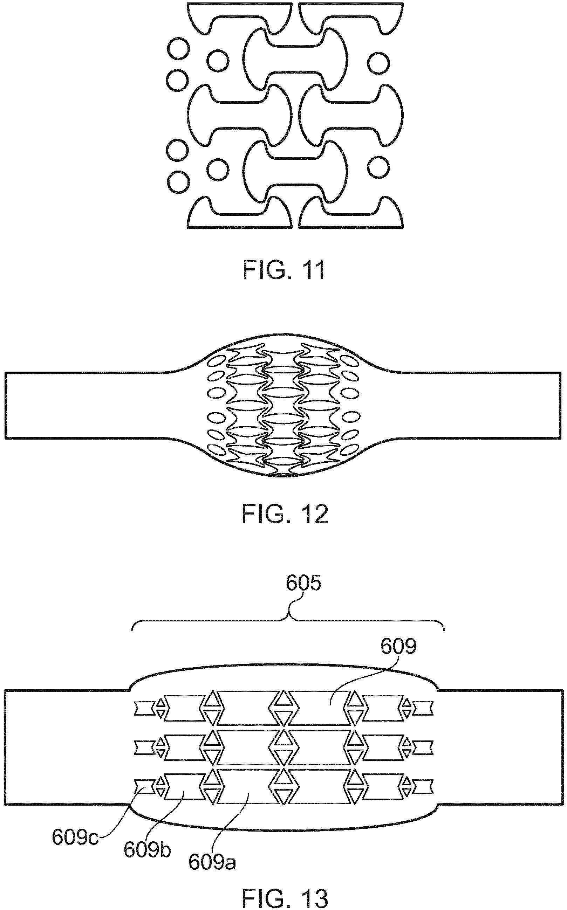

**Figures 9, 10****,** **11 and 12** illustrate alternative arrangements for cut patterns in a flexible section such as those already discussed. Figure 9 shows an example cut pattern. In Figure 10, the pattern is angled so that the ligaments between the cells are angled relative to the pipe axis. In Figure 11, two examples are shown of cut patterns in which more than one cell shape is used. This may be advantageous to control more precisely the behaviour of the flexible section. In Figure 12, the stiffness of the cut pattern is graded by varying the spacing of the cell elements, providing thinner ligaments between cells in the central region of the pattern and thicker ligaments in the end regions.

**Figure 13** shows an example of a cut pattern in a bulged pipe. In this arrangement the cell 609 shape remains constant, but the ratio of solid to removed material is varied along the length of the flexible section 605. The largest cells 609a are in the centre of the flexible section, with progressively smaller cells 609b, 609c towards the ends. In this way the stress/strain behaviour of the flexible section can be modulated along its length. Alternatively or additionally, the cut pattern may be varied around the circumference of the pipe.

One reason for grading the lattice in this way is to accommodate the minimum cut ligament dimensions achievable with laser cutting and any associated post processing required to improve the cut edge quality, for example to improve resistance to crack initiation.

Material subtraction (in CAD design optimisation) is most efficient if this can be on a meso scale, as this leads to a more graded load distribution, i.e. no macroscopic stress concentration features. To ensure that such intentional voids are not close enough to cause stress fields to interact, an optimum size and spacing can be determined for the material. The spatial distribution of such cavities can then be generated in CAD using a Vorenoi tessellation approach. The Vorenoi method can
be used to seed an initial virtual dispersion of cavities. This dispersion may be informed by rules based on laser cutting capability and minimum and maximum ligament thickness and angles with respect to strain behaviour in the loading regime of interest.

Following the original tessellation, a set of "Dual points" (for example at the centroids of the virtual cavities) can be established, this point cloud of centroids can be connected as neighbours according to rules; the Dual tessellation can be completed with rules for the shape and orientation of the connections if nonlinear. Alternatively a pattern can be projected round each Dual point.

The potential low cost nature of this approach means that multiple features may be introduced along a pipe length, i.e. more than with the prior gimballed approach, thus regulating system level vibrations and cantilevered strains.

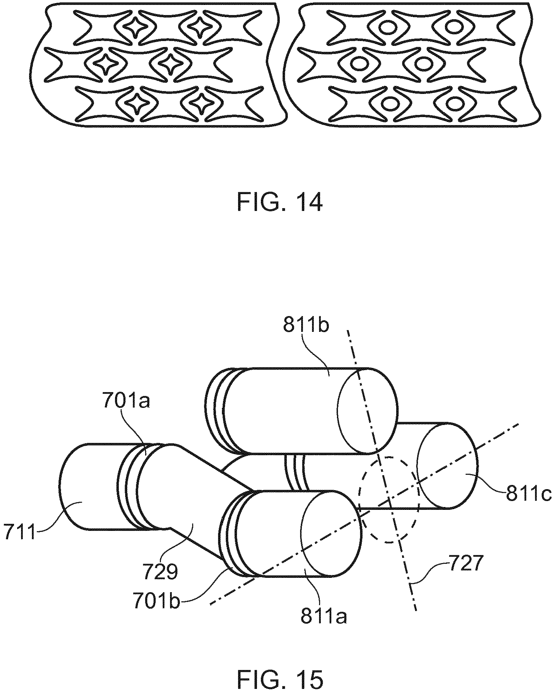

**Figure 15** illustrates how two or more flexible couplings may be combined in a length of pipe to provide advantageous movement and flexibility. A first section of pipe 711 is joined by a first flexible coupling 701a to a second section of pipe 729, which in turn is joined by a second flexible coupling 701b to a third section of pipe 811a. The provision of two flexible couplings 701a, 701b in series allows the flexing of the pipe so that the third section of pipe 811a may move, for example, to positions 811b or 811c, among others. As can be seen from the construction lines 727, the end face of the third section of pipe remains in the same plane regardless of the flexing.

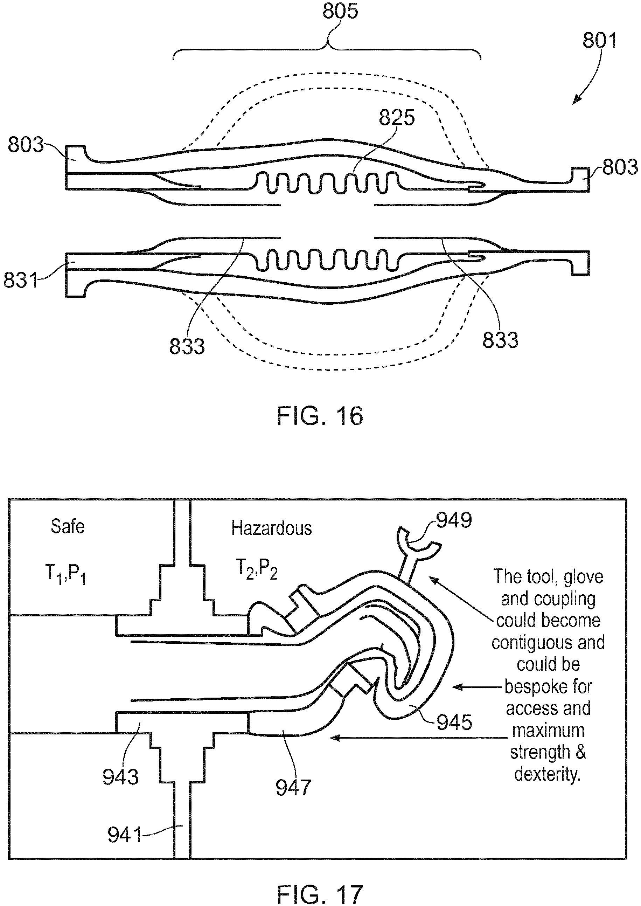

**Figure 16** shows a further arrangement of a flexible coupling 801 comprising a bellows. The attachment flange 803 at the left-hand end of the coupling has a larger internal diameter than that at the right-hand end, permitting the insertion of the bellows 825. A make-up piece or spigot connector 831 is then used to reduce the internal diameter of the left-hand end of the coupling. This arrangement also includes flow liners 833.

The invention has been described with reference to a fluid pipe for a gas turbine engine. The principles of the invention may be applied advantageously in other technical fields, as shown for example in Figure 17 which illustrates schematically part of a glove box. Glove boxes are well known to permit an operator safely to handle toxic or radioactive material, or to manipulate objects in an environment with extreme pressure or temperature. Outside the glove box wall 941 is a safe environment with pressure and temperature P₁, T₁ and an operator (not shown). Within the glove box is a hazardous environment with pressure and temperature P₂, T₂ and an object to be manipulated. A suitable attachment feature 943 in the glove box wall is connected to a glove 945 by a flexible coupling 947 of a type as described above. The glove may include an integral or attached tool 949. The flexibility of the flexible coupling allows the operator to manipulate objects within the glove box safely without risk of exposure to the hazardous environment.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

As explained above, a flexible coupling in accordance with this disclosure may be formed in a single piece by an additive manufacture process, or it may be formed from separate components welded or otherwise joined together. The flexible coupling may be welded or mechanically secured to the sections of pipe on each side. The connection on one side of the flexible coupling may be directly into a casing or airframe rather than into a section of pipe.

## Claims

1. A flexible coupling for a fluid-carrying pipe, the flexible coupling extending in use between a first pipe portion and a second pipe portion, **characterised in that** the flexible coupling comprises a tessellation of first regions and second regions in which the first regions have higher stiffness than the second regions.

2. The flexible coupling of claim 1, in which the outer wall defines a surface of revolution about an axis of revolution.

3. The flexible coupling of claim 1, in which the flexible coupling comprises an outer wall.

4. The flexible coupling of claim 2 or claim 3, in which the outer wall bulges outward so that its diameter is greater than the diameter of the first pipe portion or the second pipe portion.

5. The flexible coupling of any one of claims 2 to 4, in which the tessellation forms a regular geometric pattern over at least part of the outer wall.

6. The flexible coupling of any one of claims 2 to 5, in which the second regions are formed by removing material from the outer wall.

7. The flexible coupling of claim 6, in which the second regions define holes in the outer wall.

8. The flexible coupling of claim 6 or claim 7, and comprising second regions of at least two different shapes.

9. The flexible coupling of any one of claims 6 to 8, in which the material removal is by laser cutting.

10. The flexible coupling of claim 1, in which the first regions are ligaments each extending in use from the first pipe portion to the second pipe portion and the second regions are spaces between the ligaments.

11. The flexible coupling of claim 10, in which the ligaments bulge outward so that the diameter of the coupling is greater than the diameter of the first pipe portion or the second pipe portion.

12. The flexible coupling of claim 10 or claim 11, in which each ligament extends in use in a helical or part-helical path between the first pipe portion and the second pipe portion.

13. The flexible coupling of any one of claims 10 to 12, in which adjacent ligaments are joined by cross ligaments which subdivide the second regions.

14. The flexible coupling of claim 13, in which the cross ligaments are thinner than the ligaments.

15. The flexible coupling of any one of the preceding claims, and further comprising a flow liner defining a flow path between the first pipe portion and the second pipe portion.

16. The flexible coupling of claim 15, and further comprising a bellows extending between the first pipe portion and the second pipe portion.

17. A fluid-carrying pipe comprising a flexible coupling according to any one of the preceding claims.

18. A fluid-carrying pipe comprising at least two flexible couplings each according to any one of the preceding claims.

19. A gas turbine engine comprising a fluid-carrying pipe according to claim 17 or claim 18.
